# EUROPEAN PATENT SPECIFICATION

(11) **EP 3 160 261 B1**
(45) Date of publication and mention of the grant of the patent: **20.06.2018**
(21) Application number: 15736751.7
(22) Date of filing: 29.06.2015
(51) Int. Cl.: A23P 20/10, A23P 20/18, A23L 29/30, A23L 7/122

(54) **COATING COMPOSITIONS FOR CONSUMABLE ARTICLES**
BESCHICHTUNGSZUSAMMENSETZUNGEN FÜR VERBRAUCHSARTIKEL
COMPOSITIONS D'ENROBAGE POUR ARTICLES CONSOMMABLES

(30) Priority: 30.06.2014 US 201462018999 P
(43) Date of publication of application: 03.05.2017
(73) Proprietor: Tate & Lyle Ingredients Americas LLC, Hoffmann Estates, IL 60192 (US)
(72) Inventor: ARMENTROUT, Richard W., Carpentersville, IL 60110 (US); MATTHEW, Susan, Hoffman Estates, IL 60169 (US); FLETCHER, Josh, Hoffman Estates, IL 60192 (US); MEDHEKAR, Rohit, Schaumburg, IL 60193 (US)
(74) Representative: Nieuwenhuys, William Francis
(86) International application number: PCT/US2015/038292
(87) International publication number: WO 2016/003889

(56) References cited:
- WO-A1-2010/080203
- WO-A1-2011/131720
- WO-A1-2014/100539
- WO-A2-00/42865
- GB-A- 1 511 392
- US-A1- 2004 219 280
- US-A1- 2012 121 773
- DATABASE WPI Week 199242 Thomson Scientific, London, GB; AN 1992-344692 XP002745773, & JP H04 248953 A (ASAHI CHEM IND CO LTD) 4 September 1992 (1992-09-04)

## Description

### Field of the Invention

The present invention relates to compositions useful for forming opaque, reduced sugar coatings on consumable articles.

### Background of the Invention

Many food products, such as baked goods and ready-to-eat cereals, include an outer coating which is comprised mostly of sugar (sucrose). Such coatings may serve multiple purposes, including, for example, providing cereals with longer bowl life, imparting a crispy but non-brittle texture to the food product, and giving the surface of the food product a frosted, opaque appearance that consumers find appealing. Outer coatings of this type additionally provide enhanced sweetness and taste as compared to the uncoated food product, which typically is grain-based and has a relatively low sugar content.

Recently, however, consumers have expressed a desire for sweet-coated food products that have the same sweetness and appearance as conventional sugar-coated products, but with a reduction in the sugar content of such products. A need therefore exists for ways to provide a sweet coating for a food product that has a reduced sugar level while maintaining the bulk, taste and appearance of a traditional full sugar coating. In particular, it has proven difficult to formulate such sweet coatings which when dry have a pleasing opaque appearance, since the crystallization of sucrose is generally responsible for providing the desired opacity. As the sucrose content is reduced, a coating generally becomes glazed or translucent in appearance, rather than fully opaque. Moreover, ingredients introduced to partially replace sucrose can inhibit the crystallization of the sucrose which is still present in the coating formulation. Reduced sugar coating compositions are for example disclosed in WO2010/080203, WO2014/100539, GB1511392, JPH04248953, US2012/0121773 and WO00/42865. Titanium dioxide (TiO₂) is a pigment that has been used as an opacifying ingredient in certain types of food coatings, such as glazes for doughnuts and other pastries. While it is effective for such purposes, there has been growing consumer concern that the consumption of titanium dioxide may lead to possible health risks. Accordingly, it would be desirable to develop alternative coating compositions that are free of titanium dioxide and yet remain capable of creating a fully opaque (white) coating on a food product.

### Brief Summary of the Invention

Trisaccharides such as melezitose have been discovered to be capable of providing an opaque, aesthetically pleasing coating on food article surfaces, thereby creating a "frosted" appearance. The sweetness of the coating may be enhanced by the incorporation of one or more high intensity sweeteners in the coating. Thus, one aspect of the invention provides consumable articles coated with a composition comprised of at least one trisaccharide, wherein melezitose represents at least 50% by weight of the total amount of saccharides present in the composition. Yet another aspect of the invention furnishes a method of making a reduced sugar-coated consumable article, comprising forming a coating comprised of at least one trisaccharide on a surface of a consumable article, wherein melezitose represents at least 50% by weight of the total amount of saccharides present in the coating. The coating may be formed by drying an aqueous solution or slurry comprised of melezitose or one or more other trisaccharides on the consumable article surface.

The invention further provides a method of forming a reduced sucrose coating composition for a food product, comprising the steps of:
a) removing a positive amount of sucrose (e.g., from about 5% to 100% of the sucrose) from a sucrose-containing coating composition; and
b) replacing the removed sucrose with one or more trisaccharides, thereby forming a reduced sucrose coating composition, wherein melezitose represents at least 50% by weight of the total amount of saccharides present in the reduced sucrose coating composition.

### Description of the Figures

Figure 1 shows the results obtained when hot solutions of sucrose (left) and melezitose (right) were applied on parchment paper, cooled, and then transferred into dishes.
Figure 2 shows the results obtained when hot solutions of sucrose (left) and melezitose (right) were applied on aluminum foil and cooled.
Figure 3 shows corn flakes produced using a melezitose-containing coating.
Figure 4 shows corn flakes produced using a conventional sucrose-containing coating.

### Detailed Description of the Invention

The present invention utilizes trisaccharides such as melezitose, a naturally occurring, non-reducing tri-saccharide, in edible coating compositions capable of imparting an opaque, "fronted" appearance to consumable articles. Since, according to FDA regulations, only mono- and disaccharides are classified as "sugars," the use of a trisaccharide as a full or partial replacement for the mono- and/or disaccharides conventionally employed in a food product permits the trisaccharide-containing food product to potentially be labelled and marketed as a "low sugar" or "reduced sugar" product.

Trisaccharides are oligosaccharides composed of three monosaccharides with two glycosidic bonds connecting them. Each glycosidic bond can be formed between any hydroxyl group on the component monosaccharides. The glycosidic bonds may be α(1->6), α(1->3), α(1->4), α(1->2), α(1<->2), β(1->2), or β(1<-2). The component monosaccharides may, for example, be glucose, fructose and/or galactose.

Examples of trisaccharides suitable for use in the present invention include, for example, isomaltotriose, nigerotriose, maltotriose, melezitose, maltotriulose, raffinose, kestose, panose and erlose and combinations of two or more of such trisaccharides. Melezitose is also referred to by the chemical name α-D-glucose (1-3)-β-D-fructose (2-1)-α-D-glucose and has the empirical formula C₁₈H₃₂O₁₆. Melezitose has been assigned CAS # 10030-67-8 and has a molecular weight of 504.44 Da. This tri-saccharide can be considered as fructose substituted with two glucose residues, or as turanose (an isomer of sucrose) substituted with glucose, or as sucrose substituted with glucose. Melezitose can be partially hydrolyzed to glucose and turanose, is readily soluble in water (e.g., 26.8 g of melezitose dissolves in 100 g water at 21°C), and has a slightly sweet taste. The melting point of melezitose is reported to be 153-154°C; the glass transition temperature of melezitose is approximately 60°C.

The use of melezitose as a component of a coating composition in accordance with the present invention is advantageous because, unlike most other trisaccharides, it has been found in recent studies not to be digestible by in vitro assay and also not utilized by S. mutans in dental caries assay (Oral and intestinal digestion of oligosaccharides as potential sweeteners: A systematic evaluation. Hodoniczky et. al. Food Chemistry 132 (2012) 1951-1958).

Thus, melezitose may be considered a reduced calorie carbohydrate, with food products prepared therefrom having a lower caloric content than analogous food products based on conventional, digestible sugars. Additionally, it has been discovered that melezitose solutions readily dry, without special processing conditions being needed, to yield opaque coatings having a pleasing aesthetic appearance similar to that of dried coatings based on sucrose. When coated on corn flakes, for example, melezitose gives a non-hygroscopic, crisp, fully opaque, frosted appearance. This result was surprising, since comparatively few carbohydrates other than sucrose are capable of providing coatings having such characteristics.

The trisaccharide(s) utilized in the present invention may be obtained from any suitable source, e.g., it may be isolated from natural sources or prepared biosynthetically. Melezitose, for example, is produced by many plant sap-eating insects, including aphids such as *Cinara pilicornis* by an enzyme reaction. This process is beneficial to the insects, as it reduces the osmotic effects of high-sucrose diets by converting sucrose to oligosaccharides. The melezitose is part of the excreted "honeydew" which acts as an attractant for ants and also as a food for bees. This is useful to the aphid as they have a symbiotic relationship with ants.

Melezitose is a natural component of honey, and is ordinarily present in low amounts. However, occasionally bees will take sugars from honeydew and larger amounts of the trisaccharide will accumulate in the honey. Honeydew honey compared to blossom honey contains higher amounts of oligosaccharides, and also trisaccharides such as melezitose and raffinose.

Melezitose honey or "cement honey" is a granulated honey with very high content of melezitose. This cement honey can be harvested only with great difficulty or not be harvested at all, but can be processed to isolate the melezitose it contains. Melezitose also can be obtained by simple aqueous extraction from plant sources. The melezitose used in the coating compositions of the present invention can alternatively be produced by the enzymatic transglucosylation of sucrose. Enzymes capable of performing this transformation are present in the gut of several insects and in a number of plants.

For example, an α-glucosidase/transglucosidase enzyme ("APS1", EC3.2.1.20) has been cloned from an insect (pea aphid, *Acryrthosiphon pisum*); this enzyme may be responsible for the biosynthesis of melezitose by the insect. This enzyme or a similar activity may be used for biosynthesis of melezitose from sucrose.

In addition, honey contains an α-glucosidase enzyme derived from the hypopharyngeal gland of the honey bee (*Apis mellifera* L.). Some fraction of the oligosaccharides in honey may be derived from the transglycosylation (reversion) of honey sugars by this enzyme. The enzyme has been cloned and expressed in the yeast *Pichia pastoris* and could potentially be employed in the production of melezitose.

A composition useful for forming an opaque coating when applied to a consumable article and dried may comprise trisaccharide (e.g., melezitose) or a combination of trisaccharides and water. Generally speaking, an amount of water is combined with the trisaccharide(s) which is effective to solubilize at least a portion and preferably all of the trisaccharide(s) (e.g., melezitose). The resulting admixture may be in the form of a paste, slurry, concentrated syrup or dilute syrup. The composition may be a saturated aqueous solution of one or more trisaccharides such as melezitose. The water content of the coating composition may range, for example, from about 20% by weight to about 90% by weight.

The coating compositions of the present invention may further comprise, in addition to trisaccharide(s) and water, one or more additional ingredients such as high intensity (high potency) sweeteners (including both natural and synthetic sweeteners, such sweeteners being used in amounts effective to impart a desired level of perceived sweetness to the composition), low intensity, non-saccharide sweeteners such as polyols (e.g., sugar alcohols), saccharide sweeteners (in particular, low caloric saccharide sweeteners such as D-allulose or D-tagatose), vitamins, minerals, preservatives, stabilizers, pH adjusting agents, thickeners, rheology control agents, colorants, flavors, flavor enhancers, fragrances, triglycerides (oils, fats), non-aqueous solvents (e.g., ethanol) and the like. Suitable high intensity sweeteners include, for example, stevia extracts (containing one or more sweet steviol glycosides) or an isolated, purified steviol glycoside or combination of isolated, purified steviol glycosides such as, for example, Rebaudioside A, Rebaudioside B, Rebaudioside C, Rebaudioside D, Rebaudioside E, Rebaudioside F, Rebaudioside M (Rebaudioside X), stevioside, steviolbioside, dulcoside A, rubusoside and the like and mixtures thereof, monk fruit extracts (containing one or more sweet mogrosides) or an isolated, purified mogroside or combination of isolated, purified mogrosides such as, for example Mogroside I, II, III, IV, V and/or VI, thaumatin, brazzein, aspartame, sucralose, neotame, acesulfame potassium, saccharin and the like and combinations thereof. If a high intensity sweetener is present, it may be desirable to include one or more of the substances known in the art to be effective as a sweet taste enhancer, sweet taste modifier, sweet taste improver or flavor enhancer when utilized in combination with a high intensity sweetener or combination of high intensity sweeteners.

An amount of high intensity sweetener (or combination of high intensity sweeteners) may be present in the coating composition which is effective to impart a level of sweetness to the dried coating composition which is equivalent to the sweetness of a conventional dried coating composition based on sucrose. Such amount will vary depending upon the sweetness intensity of the high intensity sweetener but typically will be at least 0.01 weight % (based on the dry weight of the coating composition) and not greater than 2 weight % (based on the dry weight of the coating composition). For example, the coating composition may comprise a total from 0.01 to 0.7 weight % high intensity sweetener based on the dry weight of the coating composition.

A combination of trisaccharide(s) (e.g., melezitose) and another saccharide such as sucrose may be utilized in the coating composition. Thus, for example, the sucrose in a conventional coating composition may be partially (e.g., 10% to 90%) replaced with trisaccharide(s) (e.g., melezitose) as described herein. In certain embodiments of the invention, the coating composition consists essentially of, or consists of, water and trisaccharide(s). In other embodiments, the melezitose represents at least 60% by weight, at least 70% by weight, at least 75% by weight, at least 80% by weight, at least 85% by weight, at least 90% by weight, or at least 95% by weight of the total amount of saccharides present in the composition.

Where the trisaccharide or combination of trisaccharides selected for use in the coating compositions of the present invention is more resistant than sucrose to being digested and metabolized when consumed by a human being (i.e., the trisaccharide has a lower caloric value than sucrose; melezitose is an example of such a trisaccharide), the resulting coating will provide fewer calories per unit of weight than an analogous coating based on sucrose rather than trisaccharide(s). Thus, the present invention makes possible the formulation of reduced-calorie food products and the like. In accordance with the labeling regulations of the United States Food and Drug Administration, food products in accordance with the present invention can also potentially be labeled as "reduced in sugar," "sugars reduced," "less sugar," "lower in sugar," "lower sugar" or "reduced sugar."

The coating compositions of the present invention can be used to coat a wide variety of consumable articles, including various food products, that typically have a sugar coating or icing. Typically, such food products are in solid (dry) form and are grain-based. These products include, but are not limited to, all types of ready to eat (RTE) cereal; granola type products and so called trail mixes; energy bars and granola bars; baked goods such as doughnuts, cookies, pastries, cakes, pies, pretzels, crackers and muffins; frozen dairy products such as ice cream cakes and ice cream novelties; "sugar"-coated fruits and nuts, confectioneries (candy) and other such foods. Examples of forms of cereal suitable for coating with compositions in accordance with the present invention include cereal puffs, cereal flakes, cereal biscuits, cereal clusters and extruded (shaped) cereal (such as "O"-shaped cereal). The coating compositions of the present invention can impart a white-colored frosted (opaque) appearance to the surface of the product.

The coating composition may be applied to the consumable article by any method known in the art. In one embodiment, the coating composition is sprayed onto the consumable article to form a coating. The composition can be provided in the form of a slurry or solution that is sprayed through a spray nozzle to coat the consumable article. In other embodiments, the composition is drizzled, tumbled, extruded, brushed, knife-coated and/or roller-coated onto a surface of the consumable article. In one embodiment, for example, the composition may be applied by spraying a thick, hot syrup comprised of melezitose and/or other trisaccharide(s) onto cereal in a rotating drum. The composition may be heated to a temperature above room temperature during application so as to improve the flow or other characteristics of the composition. The thickness, coverage and pattern of the applied coating may each be varied as desired to meet consumer preferences or manufacturer needs. For example, the coating may fully or only partially cover the surface of the consumable article. The applied coating may be dried to remove sufficient moisture to provide a solid, adherent coating on the consumable article. Once dried, the coating becomes opaque and thus "frosted" in appearance. For example, the layer of coating composition on the consumable article may be dried to a moisture content of 5% by weight or less. Drying may be facilitated or accelerated by any conventional technique, such as heating or induced air flow. Prior to drying, sprinkles, seasonings or other toppings can be applied to the consumable article, on top of the layer of the coating composition. However, in one aspect of the invention nothing further is adhered to the coating composition before it is dried, i.e., the coating composition is not utilized as an adhesive to bind one food article to another.

In one embodiment, the components of the coating composition are selected such that when the composition is dried on a consumable article, the surface of the resulting coating is non-tacky at room temperature. In still other embodiments, the present coating compositions can be provided in a discrete or separate package for application to the consumable article by the consumer. For example, the composition can be provided in a form suitable for use as an icing for application to a baked good such as a toaster strudel. In this embodiment, the composition can be disposed within suitable packaging (e.g., fabricated from a moisture barrier flexible packing film, which is formed into a pouch) and provided as a component of a kit article comprising the consumable article, the coating composition and instructions for use or application of the coating composition.

### EXAMPLES

### Preparation of Dried Solutions (Not coated on consumable articles)

### Procedure

1. 4 g of melezitose was dissolved in 15 mL DI water (∼ 20 %)
2. The resulting solution was heated to a temperature about 10°C lower than the actual melting point of melezitose (153⁰C)
3. A thin layer of the solution was applied on a parchment paper and kept in an oven at 50°C for 30 minutes.
4. The dried solution was then removed from the parchment paper and transferred to a glass dish.
5. For comparative purposes, a solution of sucrose was prepared and dried following the above-described procedure.

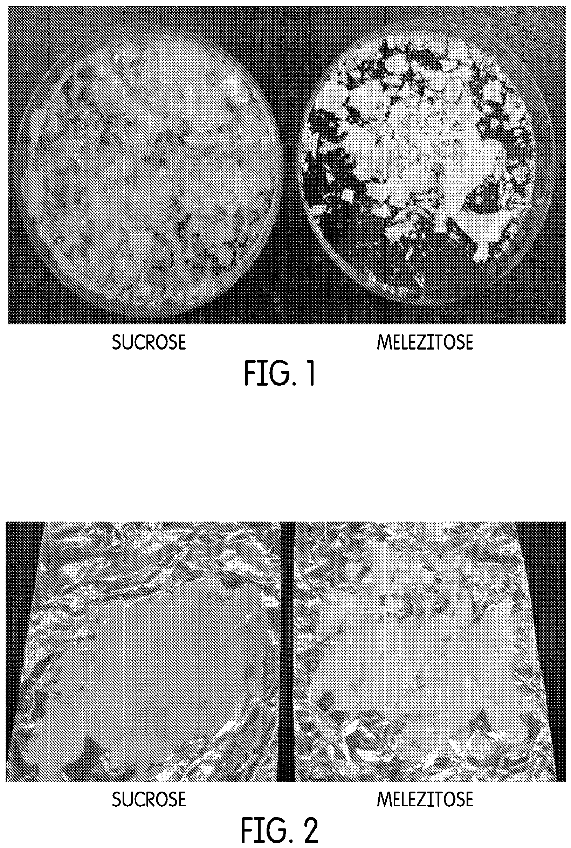

Figure 1 shows the products obtained after removal from the parchment paper and transfer to glass dishes. Figure 2 shows the products obtained after drying hot solutions of sucrose (left) and melezitose (right) on aluminum foil.

### Preparation of Corn Flakes Frosted with Melezitose

### Procedure

1. 50 g of melezitose was dissolved in 75 mL DI water.
2. 50 mL of the above solution was heated to about 110°C to about 120°C in a small steel container until it became almost a thick solution.
3. Corn flakes were added immediately into the hot steel vessel and tumble dried.
4. The frosted flakes were then transferred into a steel tray and heated in an oven (50°C) for 30 min.

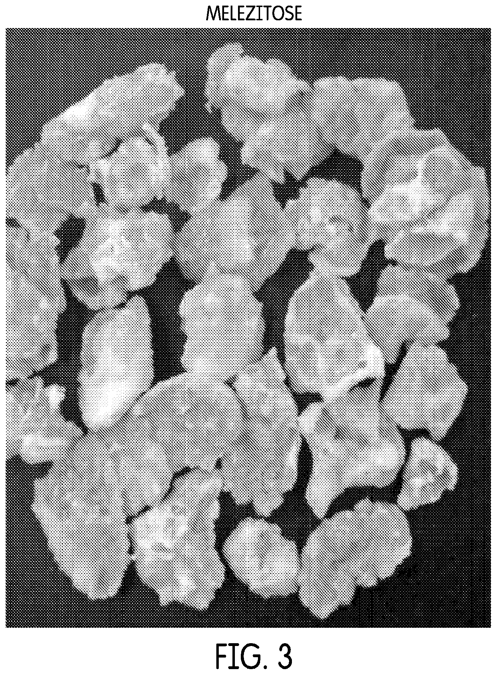

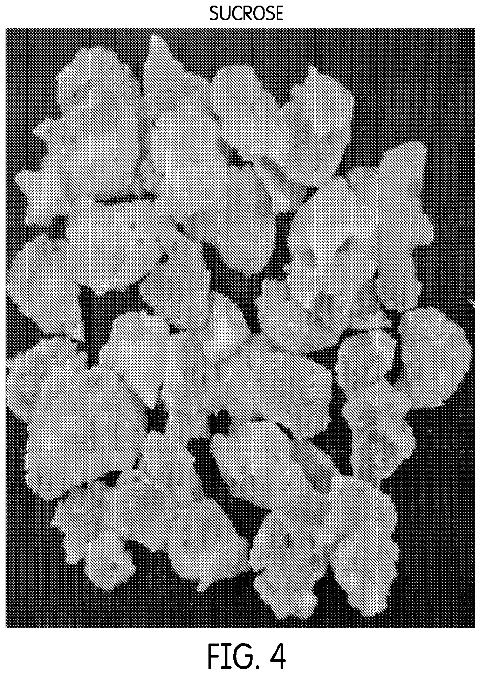

Figure 3 shows the corn flakes produced using a melezitose-containing coating, while Figure 4 shows the corn flakes produced using a conventional sucrose-containing coating.

## Claims

1. A consumable article coated with a composition comprised of at least one trisaccharide, wherein melezitose represents at least 50% by weight of the total amount of saccharides present in the composition.

2. The consumable article of claim 1, wherein the composition additionally comprises at least one high intensity sweetener.

3. A consumable article having a surface, wherein a coating is present as a layer on at least a portion of the surface and wherein the coating is comprised of an amount of trisaccharide effective to render the coating opaque in appearance, and wherein melezitose represents at least 50% by weight of the total amount of saccharides present in the coating.

4. The consumable article of claim 3, wherein the coating additionally comprises at least one high intensity sweetener.

5. The consumable article of any of claims 1-4, wherein the consumable article is selected from the group consisting of cereals, breakfast bars, granola bars, doughnuts, baked goods, energy bars, trail mixes, granolas, frozen dairy products, and confectioneries.

6. The consumable article of claim 2 or 4, wherein the at least one high intensity sweetener is selected from the group consisting of stevia extracts, isolated, purified steviol glycosides, combinations of isolated, purified steviol glycosides, monk fruit extracts, isolated, purified mogrosides, combinations of isolated,purified mogrosides, sucralose and combinations thereof.

7. A method of making a reduced sugar-coated consumable article, comprising forming a coating comprised of at least one trisaccharide on a surface of a consumable article, wherein melezitose represents at least 50% by weight of the total amount of saccharides present in the coating.

8. The method of claim 7, wherein the coating is formed by drying an aqueous solution or slurry comprised of melezitose.

9. The method of claim 7 or 8, wherein the coating additionally comprises at least one high intensity sweetener.

10. The method of any of claims 7-9 wherein the consumable article is selected from the group consisting of cereals, breakfast bars, granola bars, doughnuts, baked goods, energy bars, trail mixes, granolas, frozen dairy products, and confectioneries.

11. A method of forming a reduced sucrose coating composition for a food product, comprising the steps of:
a) removing a positive amount of sucrose from a sucrose-containing coating composition; and
b) replacing the removed sucrose with one or more trisaccharides, thereby forming a reduced sucrose coating composition, wherein melezitose represents at least 50% by weight of the total amount of saccharides present in the reduced sucrose coating composition.

12. The method of claim 11, wherein the reduced sucrose coating composition additionally comprises at least one high intensity sweetener.

13. The method of claim 11 or 12, wherein the food product is selected from the group consisting of cereals, breakfast bars, granola bars, doughnuts, baked goods, energy bars, trail mixes, granolas, frozen dairy products, and confectioneries.

14. The consumable article according to any of claims 1-6 or the method according to any of claims 7-13, wherein:
when dependent on any of claims 1-6, melezitose represents at least 75% by weight of the total amount of saccharides present in the composition;
when dependent on any of claims 7-10, melezitose represents at least 75% by weight of the total amount of saccharides present in the coating; or
when dependent on any of claims 11-13, melezitose represents at least 75% by weight of the total amount of saccharides present in the reduced sucrose coating composition.

## Patentansprüche

1. Verzehrbarer Artikel, der mit einer Zusammensetzung beschichtet ist, die aus mindestens einem Trisaccharid besteht, wobei Melezitose mindestens 50 Gew.-% der Gesamtmenge von Sacchariden darstellt, die in der Zusammensetzung vorliegen.

2. Verzehrbarer Artikel nach Anspruch 1, wobei die Zusammensetzung zusätzlich mindestens ein Hochintensitätssüßungsmittel umfasst.

3. Verzehrbarer Artikel, der eine Oberfläche aufweist, wobei eine Beschichtung als Schicht auf mindestens einem Teil der Oberfläche vorliegt und wobei die Beschichtung aus einer Menge Trisaccharid besteht, die wirksam ist, die Beschichtung aussehehnsmäßig opak zu machen und wobei Mezelitose mindestens 50 Gew.-% der Gesamtmenge von Sacchariden darstellt, die in der Beschichtung vorliegen.

4. Verzehrbarer Artikel nach Anspruch 3, wobei die Beschichtung zusätzlich mindestens ein Hochintensitätssüßungsmittel umfasst.

5. Verzehrbarer Artikel nach einem der Ansprüche 1 - 4, wobei der verzehrbare Artikel aus der Gruppe ausgewählt ist bestehend aus Zerealien, Frühstücksriegeln, Müsliriegeln, Krapfen, Backwaren, Energieriegeln, Studentenfutter, Knuspermüsli, gefrorenen Molkereiprodukten und Konditorwaren.

6. Verzehrbarer Artikel nach Anspruch 2 oder 4, wobei das mindestens eine Hochintensitätssüßungsmittel aus der Gruppe ausgewählt ist bestehend aus Steviaextrakten, isolierten, gereinigten Steviolglycosiden, Kombinationen von isolierten, gereinigten Steviolglycosiden, Buddhafruchtextrakten, isolierten, gereinigten Mogrosiden, Kombinationen isolierter, gereinigter Mogroside, Sucralose und Kombinationen davon.

7. Verfahren zur Herstellung eines verzehrbaren Artikels mit zuckerreduzierter Beschichtung, umfassend das Bilden einer Beschichtung, die aus mindestens einem Trisaccharid auf einer Oberfläche eines verzehrbaren Artikels besteht, wobei Melezitose mindestens 50 Gew.-% der Gesamtmenge an Sacchariden, die in der Beschichtung vorliegen, darstellt.

8. Verfahren nach Anspruch 7, wobei die Beschichtung durch Trocknen einer wässrigen Lösung oder Aufschlämmung, die aus Melezitose besteht, gebildet wird.

9. Verfahren nach Anspruch 7 oder 8, wobei die Beschichtung zusätzlich mindestens ein Hochintensitätssüßungsmittel umfasst.

10. Verfahren nach einem der Ansprüche 7-9, wobei der verzehrbare Artikel aus der Gruppe ausgewählt ist bestehend aus Zerealien, Frühstücksriegeln, Müsliriegeln, Krapfen, Backwaren, Energieriegeln, Studentenfutter, Knuspermüsli, gefrorenen Molkereiprodukten und Konditorwaren.

11. Verfahren zum Bilden einer Beschichtungszusammensetzung mit reduziertem Sucrosegehalt für ein Nahrungsmittelprodukt, umfassend die Schritte des:
a) Entfernens einer positiven Menge Sucrose aus einer sucrosehaltigen Beschichtungszusammensetzung; und
b) Ersetzens der entfernten Sucrose mit einem oder mehreren Trisacchariden, wodurch eine Beschichtungszusammensetzung mit reduziertem Sucrosegehalt gebildet wird, wobei Melezitose mindestens 50 Gew.-% der Gesamtmenge der Saccharide, die in der Beschichtungszusammensetzung mit reduziertem Sucrosegehalt vorliegen, darstellt.

12. Verfahren nach Anspruch 11, wobei die Beschichtungzusammensetzung mit reduziertem Sucrosegehalt zusätzlich mindestens ein Hochintensitätssüßungsmittel umfasst.

13. Verfahren nach Anspruch 11 oder 12, wobei das Nahrungsmittelprodukt aus der Gruppe ausgewählt ist bestehend aus Zerealien, Frühstücksriegeln, Müsliriegeln, Krapfen, Backwaren, Energieriegeln, Studentenfutter, Knuspermüsli, gefrorenen Molkereiprodukten und Konditorwaren.

14. Verzehrbarer Artikel nach einem der Ansprüche 1-6 oder Verfahren nach einem der Ansprüche 7-13, wobei:
wenn von einem der Ansprüche 1-6 abhängend, Melezitose mindestens 75 Gew.-% der Gesamtmenge von Sacchariden, die in der Zusammensetzung vorliegen, darstellt;
wenn von einem der Ansprüche 7-10 abhängend, Melezitose mindestens 75 Gew.-% der Gesamtmenge von Sacchariden, die in der Beschichtung vorliegen, darstellt; oder
wenn von einem der Ansprüche 11-13 abhängend, Melezitose mindestens 75 Gew.-% der Gesamtmenge von Sacchariden, die in der Beschichtungszusammensetzung mit reduziertem Sucrosegehalt vorliegen, darstellt.

## Revendications

1. Article consommable enduit d'une composition composée d'au moins un trisaccharide, du mélézitose représentant au moins 50 % en poids de la quantité totale des saccharides présents dans la composition.

2. Article consommable selon la revendication 1, la composition comprenant additionnellement au moins un édulcorant de forte intensité.

3. Article consommable présentant une surface, dans laquelle un enrobage est présent comme couche sur au moins une partie de la surface et l'enrobage étant composé d'une quantité de trisaccharide efficace pour rendre l'enrobage d'apparence opaque, et le mélézitose représentant au moins 50 % en poids de la quantité totale des saccharides présents dans l'enrobage.

4. Article consommable selon la revendication 3, l'enrobage comprenant additionnellement au moins un édulcorant de forte intensité.

5. Article consommable selon l'une quelconque des revendications 1 à 4, l'article consommable étant sélectionné dans le groupe constitué des céréales, des barres de petit-déjeuner, des barres type granola, des beignets, des aliments cuits au four, des barres énergétiques, des mélanges pour randonnée, des granolas, des produits laitiers congelés, et des confiseries.

6. Article consommable selon la revendication 2 ou 4, ledit au moins un édulcorant de forte intensité étant sélectionné dans le groupe constitué des extraits de stévia, des glycosides de stéviol isolés, purifiés, des combinaisons de glycosides de stéviol isolés, purifiés, des extraits de fruit du moine, des mogrosides isolés, purifiés, des combinaisons de mogrosides isolés, purifiés, du sucralose et de leurs combinaisons.

7. Procédé de fabrication d'un article consommable enrobé de sucre réduit, comprenant la formation d'un enrobage composé d'au moins un trisaccharide sur une surface d'un article consommable, du mélézitose représentant au moins 50 % en poids de la quantité totale des saccharides présents dans l'enrobage.

8. Procédé selon la revendication 7, l'enrobage étant formé par séchage d'une solution ou d'une suspension aqueuse composée de mélézitose.

9. Procédé selon la revendication 7 ou 8, l'enrobage comprenant additionnellement au moins un édulcorant de forte intensité.

10. Procédé selon l'une quelconque des revendications 7 à 9, l'article consommable étant sélectionné dans le groupe constitué des céréales, des barres de petit-déjeuner, des barres type granola, des beignets, des aliments cuits au four, des barres énergétiques, des mélanges pour randonnée, des granolas, des produits laitiers congelés, et des confiseries.

11. Procédé de formation d'une composition d'enrobage de saccharose réduit destinée à un produit alimentaire, comprenant les étapes :
a) d'élimination d'une quantité positive de saccharose à partir d'une composition d'enrobage contenant du saccharose; et
b) de remplacement du saccharose retiré par un ou plusieurs trisaccharides, formant ainsi une composition d'enrobage de saccharose réduit, le mélézitose représentant au moins 50 % en poids de la quantité totale des saccharides présents dans la composition d'enrobage de saccharose réduit.

12. Procédé selon la revendication 11, la composition d'enrobage de saccharose réduit comprenant additionnellement au moins un édulcorant de forte intensité.

13. Procédé selon la revendication 11 ou 12, le produit alimentaire étant sélectionné dans le groupe constitué des céréales, des barres de petit-déjeuner, des barres type granola, des beignets, des aliments cuits au four, des barres énergétiques, des mélanges pour randonnée, des granolas, des produits laitiers congelés, et des confiseries.

14. Article consommable selon l'une quelconque des revendications 1 à 6 ou procédé selon l'une quelconque des revendications 7 à 13, dans lequel:
en dépendant de l'une quelconque des revendications 1 à 6, le mélézitose représente au moins 75 % en poids de la quantité totale des saccharides présents dans la composition;
en dépendant de l'une quelconque des revendications 7 à 10, le mélézitose représente au moins 75 % en poids de la quantité totale des saccharides présents dans l'enrobage; ou
en dépendant de l'une quelconque des revendications 11 à 13, le mélézitose représente au moins 75 % en poids de la quantité totale des saccharides présents dans la composition d'enrobage de saccharose réduit.
